# EUROPÄISCHE PATENTSCHRIFT

(11) **EP 4 380 813 B1**
(45) Veröffentlichungstag und Bekanntmachung des Hinweises auf die Patenterteilung: **06.08.2025**
(21) Anmeldenummer: 22734259.9
(22) Anmeldetag: 14.06.2022
(51) Int. Cl.: B60L 7/24, B60T 1/10

(54) **VERFAHREN ZUM BETREIBEN EINES BREMSUNTERSTÜTZUNGSSYSTEMS FÜR EIN ELEKTROMOTORRAD**
METHOD FOR OPERATING A BRAKE SUPPORT SYSTEM FOR AN ELECTRIC MOTORBICYCLE
PROCÉDÉ D'OPERER UN SYSTÈME DE SUPPORT DE FREINAGE POUR MOTOCYCLE ÉLECTRIQUE

(30) Priorität: 06.08.2021 DE 102021208582
(43) Veröffentlichungstag der Anmeldung: 12.06.2024
(73) Patentinhaber: Robert Bosch GmbH, 70442 Stuttgart (DE)
(72) Erfinder: KLUG, Silas, 71106 Magstadt (DE); MOIA, Alessandro, 71088 Holzgerlingen (DE)
(86) Internationale Anmeldenummer: PCT/EP2022/066093
(87) Internationale Veröffentlichungsnummer: WO 2023/011787

(56) Entgegenhaltungen:
- WO-A1-2020/118233
- CN-A- 106 364 333
- DE-A1- 102015 122 098
- US-A1- 2011 233 994
- US-A1- 2012 138 375
- US-A1- 2018 093 571
- US-A1- 2019 233 048

## Beschreibung

### Gebiet der Erfindung

Die Erfindung betrifft ein Verfahren zum Betreiben eines Bremsunterstützungssystems für ein Elektromotorrad. Des Weiteren betrifft die Erfindung ein Steuergerät, ein Computerprogramm und ein computerlesbares Medium zum Ausführen eines solchen Verfahrens sowie ein Bremsunterstützungssystem, das mit einem solchen Steuergerät ausgestattet ist.

### Stand der Technik

Ein ABS-System umfasst in der Regel verschiedene hydraulische und elektrische Komponenten zur Bremsdruckregelung. Beispielsweise kann ein sehr einfaches ABS-System bereits mithilfe eines Einlassventils, eines Auslassventils, einer Speicherkammer und eines Rückschlagventils realisiert sein.

Bei mit einem Elektromotor angetriebenen Elektromotorrädern besteht grundsätzlich die Möglichkeit, den Elektromotor zur Momentmodulation einzusetzen. Allerdings kann sich in der Praxis je nach Fahrzeugtyp oder Größe des Elektromotors die Problematik ergeben, dass das vom Elektromotor erzeugbare maximale Drehmoment allein nicht ausreicht, um die Anforderungen eines ABS-Systems zu erfüllen.

Stand der Technik ist WO 2020/118233 A1, in der ein ABS System in Verbindung mit einem Elektromotor beschrieben ist.

### Offenbarung der Erfindung

Vor diesem Hintergrund werden mit dem hier vorgestellten Ansatz ein Verfahren nach Anspruch 1 zum Betreiben eines Bremsunterstützungssystems für ein Elektromotorrad, ein entsprechendes Steuergerät, ein entsprechendes Bremsunterstützungssystem, ein entsprechendes Computerprogramm und ein entsprechendes computerlesbares Medium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung ermöglichen es, ein Elektromotorrad durch Kombination einer elektromotorischen mit einer nicht elektromotorischen Bremsfunktion, beispielsweise einer hydraulischen Bremsfunktion, abzubremsen. Auf diese Weise kann ein entsprechendes Bremsunterstützungssystem für das Elektromotorrad sehr kostengünstig bereitgestellt werden, beispielsweise indem die Anzahl der hydraulischen Komponenten des Bremsunterstützungssystems verringert werden kann. Darüber hinaus kann die Bremsleistung des Elektromotorrads verbessert werden.

Ein erster Aspekt der Erfindung betrifft ein computerimplementiertes Verfahren zum Betreiben eines Bremsunterstützungssystems für ein Elektromotorrad. Das Verfahren umfasst zumindest die folgenden Schritte: Bestimmen eines zum Abbremsen des Elektromotorrads erforderlichen Gesamtbremsmoments; Bestimmen eines mittels eines Elektromotors des Elektromotorrads zu erzeugenden Motormoments in Abhängigkeit von dem Gesamtbremsmoment und einem mittels einer Bremsanlage des Elektromotorrads erzeugbaren maximalen Bremsmoment; und, wenn das maximale Bremsmoment erzeugt wird, Erzeugen eines Steuerbefehls zum Ansteuern des Elektromotors, sodass das Motormoment zusammen mit dem maximalen Bremsmoment erzeugt wird.

Unter "Elektromotorrad" kann allgemein ein einspuriges Fahrzeug oder Zweirad mit einem Antrieb in Form eines Elektromotors oder einer Kombination aus einem Elektromotor und einem Verbrennungsmotor verstanden werden. Bei dem Elektromotorrad kann es sich auch um einen Elektroroller, ein Elektrofahrrad oder ein motorradähnliches zweispuriges Fahrzeug mit mehr als zwei Rädern, z. B. ein Quad, handeln.

Das Motormoment kann ein Antriebsmoment oder ein Brems- oder Rekuperationsmoment sein.

Unter "Gesamtbremsmoment" kann beispielsweise ein basierend auf einer aktuellen Raddrehzahl eines oder mehrerer Räder des Elektromotorrads und/oder einer aktuellen Motordrehzahl des Elektromotors geschätztes Bremsmoment verstanden werden. Die aktuelle Raddrehzahl kann beispielsweise mittels eines gesonderten Raddrehzahlsensors gemessen worden sein. Möglich ist aber auch eine Bestimmung der aktuellen Raddrehzahl aus der aktuellen Motordrehzahl. In diesem Fall kann auf einen gesonderten Raddrehzahlsensor verzichtet werden.

Das Gesamtbremsmoment kann so bestimmt werden, dass das Blockieren desjenigen Rads vermieden wird, das sowohl mit dem maximalen Bremsmoment der Bremsanlage als auch mit dem Motormoment des Elektromotors beaufschlagt wird, beispielsweise bei einer Not- oder Vollbremsung. Das Gesamtbremsmoment kann also als ein Bremsmoment aufgefasst werden, mit dem das Elektromotorrad möglichst schnell und sicher abgebremst und/oder zum Stehen gebracht werden soll.

Dabei kann das maximale Gesamtbremsmoment beispielsweise gleich einer Summe aus dem maximalen Bremsmoment der Bremsanlage und einem maximalen negativen Motormoment, also einem maximalen Brems- oder Rekuperationsmoment des Elektromotors, sein. Das maximale Gesamtbremsmoment sollte so gewählt sein, dass das Elektromotorrad in jeder Fahrsituation schnell und sicher zum Stehen gebracht werden kann.

Es ist möglich, dass der Elektromotor und die Bremsanlage auf ein und dasselbe Rad oder ein und dieselben Räder des Elektromotorrads wirken, beispielsweise auf dessen Hinterrad. Möglich ist aber auch, dass der Elektromotor das Hinterrad antreibt, während die Bremsanlage das Vorderrad oder, zusätzlich, das Hinterrad abbremst. Beispielsweise kann die Bremsanlage in diesem Fall als einkanaliges ABS-System für das Vorderrad konfiguriert sein. Das Hinterrad kann dabei ausschließlich über den Elektromotor im Rekuperationsmodus abgebremst werden.

Das hier und nachstehend beschriebene Verfahren ermöglicht es, den Elektromotor zur gezielten Modulation des Bremsmoments einzusetzen, wobei sozusagen ein Mittelwert dieses Bremsmoments, unabhängig vom Elektromotor, von der Bremsanlage bereitgestellt wird. Der Mittelwert kann betragsmäßig verkleinert oder vergrößert werden, indem, zeitgleich oder geringfügig zeitlich versetzt, ein Antriebsmoment bzw. ein Brems- oder Rekuperationsmoment mittels des Elektromotors erzeugt wird.

Hierzu ist es zweckmäßig, wenn der Arbeitspunkt der Bremsanlage in entsprechender Weise verschoben wird, d. h., das maximale Bremsmoment, das mittels der Bremsanlage erzeugbar ist, beispielsweise deren maximaler Bremsdruck, an das maximale Motormoment des Elektromotors in geeigneter Weise angepasst wird. Beispielsweise kann die Bremsanlage im einfachsten Fall mit einem entsprechenden Trenn- oder Druckbegrenzungsventil ausgestattet sein. Ein solches Ventil kann sehr einfach nachgerüstet werden.

Insbesondere bei Elektrorollern kann das Brems- oder Rekuperationsmoment des Elektromotors allein nicht ausreichend sein, um das Elektromotorrad schnell oder stark genug abzubremsen. Vorteilhaft ist allerdings, dass der Elektromotor das Motormoment mit sehr hoher Dynamik modulieren kann, die für eine ABS-Regelung durchaus ausreichend wäre.

Indem nun die über den Elektromotor erzielte Bremswirkung mit der Bremswirkung einer zusätzlichen, beispielsweise hydraulischen Bremsanlage kombiniert wird, die in der Lage ist, das erforderliche hohe Bremsmoment bereitzustellen, kann mit relativ geringem Kostenaufwand eine ABS-Funktionalität realisiert werden, die beiden Anforderungen genügt.

Sofern die Bremsanlage und der Elektromotor gleichzeitig aktiviert werden, ergibt sich im Fall einer Bremsung das auf das betreffende Rad ausgeübte Gesamtbremsmoment als Summe aus dem Motormoment des Elektromotors und dem Bremsmoment der Bremsanlage.

Erzeugt der Elektromotor während des Bremsvorgangs ein positives Motormoment, so wirkt er der Bremsanlage entgegen und reduziert das auf das Rad wirkende Gesamtbremsmoment entsprechend. Die Bremsanlage definiert sozusagen den Mittelwert des Bremsmoments und mittels des Elektromotors wird dann das auf das Rad wirkende Gesamtmoment um diesen Mittelwert moduliert, d. h. von diesem ausgehend erhöht oder verringert.

Da eine typische (hydraulische) Bremsanlage ein maximales Bremsmoment erzeugt, das in der Regel deutlich größer als das maximale Antriebsmoment eines typischen Elektromotors ist, wäre der Elektromotor bei einer Vollbremsung normalerweise nicht in der Lage, das mittels der Bremsanlage erzeugte Bremsmoment vollständig aufzuheben. Durch Einbau eines entsprechenden Ventils in die Bremsanlage kann allerdings gewährleistet werden, dass zum einen die Summe des begrenzten maximalen Bremsmoments der Bremsanlage und des maximalen Bremsmoments des Elektromotors dem für eine Notbremsung erforderlichen maximalen Gesamtbremsmoment entspricht und zum anderen das begrenzte maximale Bremsmoment der Bremsanlage vollständig durch das maximale Antriebsmoment des Elektromotors kompensierbar ist, sodass in diesem Fall das auf das betreffende Rad wirkende Gesamtdrehmoment gleich null ist.

Durch eine derartige Begrenzung ist es also möglich, mittels des Elektromotors das Gesamtbremsmoment zwischen null und dem für eine Notbremsung erforderlichen maximalen Bremsmoment mit einer für eine ABS-Funktionalität ausreichenden Dynamik zu modulieren. Vorteilhaft ist, dass eine solche ABS-Funktionalität durch einfache Kombination eines bereits vorhandenen elektrischen Antriebsmotors und einer bereits vorhandenen (hydraulischen) Bremsanlage mit nur einer einzigen zusätzlichen Komponente in Form eines Ventils realisiert werden kann.

Eine entsprechende Steuerungslogik kann beispielsweise in einem Steuergerät des Elektromotorrads implementiert sein. Ein Raddrehzahlsensor ist nicht zwingend erforderlich, denn die Raddrehzahl kann beispielweise auch unter Verwendung etwaiger interner Hallsensoren des Elektromotors aus dessen Motordrehzahl bestimmt werden.

Ein zweiter Aspekt der Erfindung betrifft ein Steuergerät. Das Steuergerät umfasst einen Prozessor, der konfiguriert ist, um das Verfahren gemäß einer Ausführungsform im Sinne des ersten Aspekts der Erfindung auszuführen. Merkmale des Verfahrens gemäß einer Ausführungsform im Sinne des ersten Aspekts der Erfindung können auch Merkmale des Steuergeräts sein und umgekehrt.

Das Steuergerät kann Hardware- und/oder Softwaremodule umfassen. Zusätzlich zum Prozessor kann das Steuergerät einen Speicher und Datenkommunikationsschnittstellen zur Datenkommunikation mit Peripheriegeräten umfassen.

Ein dritter Aspekt der Erfindung betrifft ein Bremsunterstützungssystem für ein Elektromotorrad. Das Bremsunterstützungssystem umfasst zumindest einen Elektromotor zum Beschleunigen und/oder Abbremsen des Elektromotorrads und ein Steuergerät gemäß einer Ausführungsform im Sinne des zweiten Aspekts der Erfindung. Ein solches Bremsunterstützungssystem kann besonders billig hergestellt werden. Zudem kann ein solches Bremsunterstützungssystem zu einer erheblichen Verbesserung der Bremsleistung eines Elektromotorrads beitragen. Somit können Unfälle vermieden werden.

Ein vierter Aspekt der Erfindung betrifft ein Computerprogramm. Das Computerprogramm umfasst Befehle, die einen Prozessor bei Ausführung des Computerprogramms durch den Prozessor veranlassen, das Verfahren gemäß einer Ausführungsform im Sinne des ersten Aspekts der Erfindung auszuführen.

Ein fünfter Aspekt der Erfindung betrifft ein computerlesbares Medium, auf dem das Computerprogramm gemäß einer Ausführungsform im Sinne des dritten Aspekts der Erfindung gespeichert ist. Das computerlesbare Medium kann ein flüchtiger oder nicht flüchtiger Datenspeicher sein. Beispielsweise kann das computerlesbare Medium eine Festplatte, ein USB-Speichergerät, ein RAM, ROM, EPROM oder Flash-Speicher sein. Das computerlesbare Medium kann auch ein einen Download eines Programmcodes ermöglichendes Datenkommunikationsnetzwerk wie etwa das Internet oder eine Datenwolke (Cloud) sein.

Merkmale des Verfahrens gemäß einer Ausführungsform im Sinne des ersten Aspekts der Erfindung können auch Merkmale des Computerprogramms und/oder des computerlesbaren Mediums sein und umgekehrt.

Ideen zu Ausführungsformen der vorliegenden Erfindung können unter anderem als auf den nachfolgend beschriebenen Gedanken und Erkenntnissen beruhend angesehen werden.

Gemäß einer Ausführungsform kann das Motormoment durch Bilden einer Differenz aus dem Gesamtbremsmoment und dem maximalen Bremsmoment bestimmt werden. Auf diese Weise kann das Gesamtbremsmoment besonders effizient bestimmt werden.

Gemäß einer Ausführungsform ist ein mittels des Elektromotors erzeugbares maximales Antriebsmoment betragsmäßig nicht kleiner als das maximale Bremsmoment. Dies hat den Effekt, dass die Bremswirkung der Bremsanlage durch die Bremswirkung des Elektromotors gegebenenfalls kompensiert werden kann, insbesondere im Fall einer Voll- oder Notbremsung, wenn die Bremsanlage das maximale Bremsmoment erzeugt und verhindert werden soll, dass das jeweils abgebremste Rad blockiert.

Gemäß einer Ausführungsform kann das Verfahren ferner den folgenden Schritt umfassen: Empfangen von Messdaten, die eine aktuelle Drehzahl des Elektromotors anzeigen. Dabei kann das Gesamtbremsmoment durch Auswerten der Messdaten bestimmt werden. Die Messdaten können beispielsweise mittels eines entsprechenden Drehzahlsensors, etwa in Form eines Hallsensors, bereitgestellt worden sein. Möglich ist auch eine Schätzung der Drehzahl aufgrund gemessener Phasenspannungen und/oder -ströme des Elektromotors. Auf diese Weise kann auf den Einsatz eines gesonderten Raddrehzahlsensors verzichtet werden. Damit kann die Herstellung des Bremsunterstützungssystems weiter verbilligt werden.

Gemäß einer Ausführungsform kann das Bremsunterstützungssystem ferner eine Bremsanlage zum Abbremsen des Elektromotorrads umfassen. Dabei kann die Bremsanlage so angepasst sein, dass ein mittels der Bremsanlage erzeugbares maximales Bremsmoment betragsmäßig nicht größer ist als ein mittels des Elektromotors erzeugbares maximales Antriebsmoment. Die Bremsanlage kann beispielsweise eine hydraulische Vorder- und/oder Hinterradbremse sein. Wie eingangs erwähnt, kann die Bremsanlage beispielsweise ein Einlassventil, ein Auslassventil, eine Speicherkammer und ein Rückschlagventil umfassen. Damit kann der durch einen Fahrer durch Betätigen eines Bremshebels oder -pedals erzeugbare Bremsdruck in technisch effizienter Weise so begrenzt werden, dass das maximale Bremsmoment der Bremsanlage durch das maximale Antriebsmoment des Elektromotors kompensierbar ist.

Gemäß einer Ausführungsform kann die Bremsanlage einen hydraulischen Bremskreis und mindestens ein Bremsdruckventil zum Begrenzen eines Bremsdrucks im hydraulischen Bremskreis auf einen dem maximalen Antriebsmoment entsprechenden Wert umfassen. Anders ausgedrückt kann der maximale Bremsdruck im hydraulischen Bremskreis so begrenzt sein, dass das maximale Bremsmoment der Bremsanlage betragsmäßig höchstens so groß wie das maximale Antriebsmoment ist. Das Bremsdruckventil kann beispielsweise ein Trennventil sein, das den Geber- vom Nehmerzylinder bei Erreichen eines bestimmten Bremsdrucks entkoppelt. Das Trennventil kann beispielsweise mittels des Steuergeräts des Elektromotorrads in Abhängigkeit von einem gemessenen aktuellen Bremsdruck im hydraulischen Bremskreis ansteuerbar sein. Dies hat den Vorteil, dass das maximale Bremsmoment je nach Fahrsituation, beispielsweise abhängig vom Fahrbahnbelag, variiert werden kann. Alternativ kann das Bremsdruckventil als einfaches Druckbegrenzungsventil ausgeführt sein, beispielsweise als Rückschlagventil, d. h. als ein passives Bauteil, das den Bremsdruck auf einen festen Wert begrenzt, der dem maximalen Antriebsmoment des Elektromotors entspricht.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein Elektromotorrad mit einem Bremsunterstützungssystem gemäß einem Ausführungsbeispiel der Erfindung.
Fig. 2 zeigt eine detaillierte Ansicht einer Bremsanlage des Bremsunterstützungssystems aus Fig. 1.
Fig. 3 zeigt ein Diagramm zur Gegenüberstellung von Arbeitsbereichen eines Elektromotors und einer Bremsanlage des Bremsunterstützungssystems aus Fig. 1.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

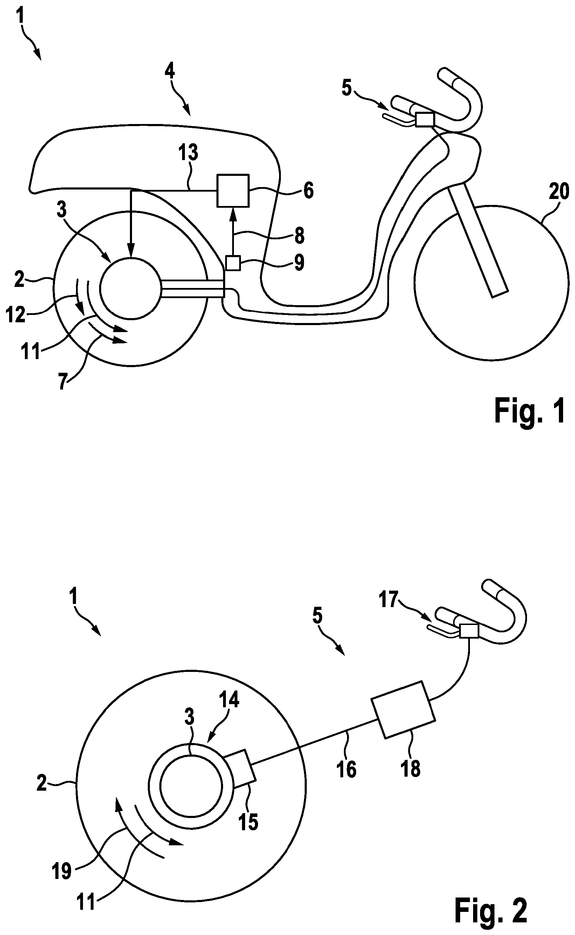

Fig. 1 zeigt ein Elektromotorrad 1, hier ein Elektroroller, das an seinem Hinterrad 2 von einem Elektromotor 3 angetrieben wird. Der Elektromotor 3 ist Teil eines Bremsunterstützungssystems 4, das neben dem Elektromotor 3 eine Bremsanlage 5, hier eine hydraulische Hinterradbremse zum Abbremsen des Hinterrads 2, und ein Steuergerät 6 zum Ansteuern des Elektromotors 3 umfasst.

Hierzu bestimmt das Steuergerät 6 ein Gesamtbremsmoment 7, das zum Abbremsen des Elektromotorrads 1 bis zum Stillstand erforderlich ist. Das Gesamtbremsmoment 7 kann beispielsweise aus Messdaten 8, die mittels eines Motordrehzahlsensors 9 zum Messen einer Motordrehzahl des Elektromotors 3 bereitgestellt werden, in mehreren aufeinanderfolgenden Zeitschritten vom Steuergerät 6 bei einer erkannten Voll- oder Notbremsung berechnet werden.

Anschließend bestimmt das Steuergerät 6 aus dem Gesamtbremsmoment 7 unter Berücksichtigung eines maximalen Bremsmoments 11, das mittels der Bremsanlage 5 am Hinterrad 2 erzeugt werden kann, ein Motormoment 12, das vom Elektromotor 3 zusätzlich zur Bremsanlage 5 am Hinterrad 2 erzeugt werden soll.

Im einfachsten Fall kann das Motormoment 12 durch Subtrahieren des maximalen Bremsmoments 11 vom Gesamtbremsmoment 7 bestimmt werden. Alternativ ist es möglich, dass bei einem gegebenen Wert des Gesamtbremsmoments 7 ein entsprechender Wert für das Motormoment 12 aus einer im Steuergerät 6 hinterlegten Lookup-Tabelle ausgelesen wird.

Je nach Gesamtbremsmoment 7 kann das Motormoment 12 einer Richtung des maximalen Bremsmoments 11 entgegengesetzt sein oder, wie in Fig. 1 gezeigt, in dieselbe Richtung wie das maximale Bremsmoment 11 wirken.

Die Bremsanlage 5 und/oder der Elektromotor 3 können so ausgelegt sein, dass die Summe des maximalen (negativen) Motormoments 12 und des maximalen Bremsmoments 11 dem maximalen Gesamtbremsmoment 7 entspricht, das zum Abbremsen des Elektromotorrads 1 maximal erforderlich sein kann.

Zusätzlich oder alternativ können die Bremsanlage 5 und/oder der Elektromotor 3 so ausgelegt sein, dass das maximale (positive) Motormoment 12 dem maximalen Bremsmoment 11 entspricht, d. h. betragsmäßig nicht kleiner als das maximale Bremsmoment 11 ist. Dadurch ist es möglich, die Bremswirkung der Bremsanlage 5 mittels des Elektromotors 3 gegebenenfalls aufzuheben.

Schließlich erzeugt das Steuergerät 6 basierend auf dem Motormoment 12 einen entsprechenden Steuerbefehl 13 zum Ansteuern des Elektromotors 3, wodurch bewirkt wird, dass das Hinterrad 2, im Fall einer Not- oder Vollbremsung, sowohl mit dem maximalen Bremsmoment 11 als auch mit dem Motormoment 12 und damit mit dem zuvor bestimmten Gesamtbremsmoment 7 beaufschlagt wird.

Fig. 2 zeigt die Bremsanlage 5 im Detail. Diese umfasst beispielhaft eine drehfest mit dem Hinterrad 2 verbundene hintere Bremsscheibe 14 und einen hinteren Bremssattel 15, der über einen hydraulischen Bremskreis 16 mit einem Geberzylinder 17 am Lenker des Elektromotorrads 1 hydraulisch verbunden ist.

Zwischen dem hinteren Bremssattel 15 und dem Geberzylinder 17 ist ein Bremsdruckbegrenzungsventil 18 im hydraulischen Bremskreis 16 angeordnet, über das der hydraulische Bremsdruck in der Bremsanlage 5 begrenzt wird.

Das Bremsdruckbegrenzungsventil 18 ist so konfiguriert, dass der hydraulische Bremsdruck nur so groß werden kann, dass das am Hinterrad 2 mittels des hinteren Bremssattels 14 erzeugte maximale Bremsmoment 11 betragsmäßig höchstens gleich einem maximalen Antriebsmoment 19 des Elektromotors 3 ist.

Das Bremsdruckbegrenzungsventil 18 kann beispielsweise als Rückschlagventil oder elektrisch ansteuerbares Trennventil mit variierbarem oder konstantem Sperrdruck ausgeführt sein.

Alternativ kann die Bremsanlage 5 als hydraulische Vorderradbremse zum Abbremsen eines Vorderrads 20 des Elektromotorrads 1 (siehe Fig. 1) realisiert sein oder eine solche Vorderradbremse zusätzlich zur Hinterradbremse umfassen.

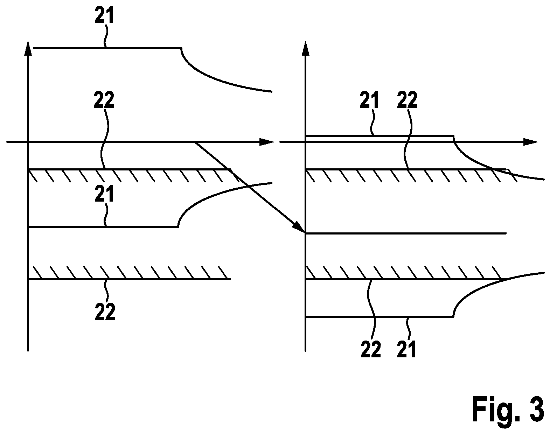

In Fig. 3 ist zu sehen, wie ein Motorarbeitsbereich 21 des Elektromotors 3 und ein Bremsenarbeitsbereich 22 der Bremsanlage 5, d. h. ein erforderlicher ABS-Arbeitsbereich, durch die Begrenzung des hydraulischen Bremsdrucks mittels des Bremsdruckbegrenzungsventils 18 relativ zueinander verschoben werden, um die gewünschte Kombination beider Bremswirkungen zu erhalten. Dabei ist jeweils auf der Ordinate das jeweilige Moment und auf der Abszisse die Geschwindigkeit des Elektromotorrads 1 aufgetragen.

Abschließend wird darauf hingewiesen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Bremsunterstützungssystems (4) für ein Elektromotorrad (1), wobei das Verfahren umfasst:
Bestimmen eines zum Abbremsen des Elektromotorrads (1) erforderlichen Gesamtbremsmoments (7); **gekennzeichnet durch**
Bestimmen eines mittels eines Elektromotors (3) des Elektromotorrads (1) zu erzeugenden Motormoments (12) in Abhängigkeit von dem Gesamtbremsmoment (7) und einem mittels einer Bremsanlage (5) des Elektromotorrads (1) erzeugbaren maximalen Bremsmoment (11); und,
wenn das maximale Bremsmoment (11) erzeugt wird, Erzeugen eines Steuerbefehls (13) zum Ansteuern des Elektromotors (3), sodass das Motormoment (12) zusammen mit dem maximalen Bremsmoment (11) erzeugt wird.

2. Verfahren nach Anspruch 1,
wobei das Motormoment (12) durch Bilden einer Differenz aus dem Gesamtbremsmoment (7) und dem maximalen Bremsmoment (11) bestimmt wird.

3. Verfahren nach einem der vorhergehenden Ansprüche,
wobei ein mittels des Elektromotors (3) erzeugbares maximales Antriebsmoment (19) betragsmäßig nicht kleiner ist als das maximale Bremsmoment (11).

4. Verfahren nach einem der vorhergehenden Ansprüche, ferner umfassend:
Empfangen von Messdaten (8), die eine aktuelle Drehzahl des Elektromotors (3) anzeigen;
wobei das Gesamtbremsmoment (7) durch Auswerten der Messdaten (8) bestimmt wird.

5. Steuergerät (6), umfassend einen Prozessor, der konfiguriert ist, um das Verfahren nach einem der vorhergehenden Ansprüche auszuführen.

6. Bremsunterstützungssy stem (4) für ein Elektromotorrad (1), wobei das Bremsunterstützungssystem (4) umfasst:
einen Elektromotor (3) zum Beschleunigen und/oder Abbremsen des Elektromotorrads (1); und
ein Steuergerät (6) nach Anspruch 5.

7. Bremsunterstützungssy stem (4) nach Anspruch 6, ferner umfassend:
eine Bremsanlage (5) zum Abbremsen des Elektromotorrads (1);
wobei die Bremsanlage (5) so angepasst ist, dass ein mittels der Bremsanlage (5) erzeugbares maximales Bremsmoment (11) betragsmäßig nicht größer ist als ein mittels des Elektromotors (3) erzeugbares maximales Antriebsmoment (19).

8. Bremsunterstützungssy stem (4) nach Anspruch 7,
wobei die Bremsanlage (5) einen hydraulischen Bremskreis (16) und mindestens ein Bremsdruckventil (18) zum Begrenzen eines Bremsdrucks im hydraulischen Bremskreis (16) auf einen dem maximalen Antriebsmoment (19) entsprechenden Wert umfasst.

9. Computerprogramm, umfassend Befehle, die einen Prozessor bei Ausführung des Computerprogramms durch den Prozessor veranlassen, das Verfahren nach einem der Ansprüche 1 bis 4 auszuführen.

10. Computerlesbares Medium, auf dem das Computerprogramm nach Anspruch 9 gespeichert ist.

## Claims

1. Method for operating a brake assist system (4) for an electric motorcycle (1),
wherein the method comprises:
determining a total braking torque (7) required for braking the electric motorcycle (1); **characterized by**
determining a motor torque (12) to be generated by means of an electric motor (3) of the electric motorcycle (1) in dependence on the total braking torque (7) and on a maximum braking torque (11) that can be generated by means of a brake system (5) of the electric motorcycle (1); and,
when the maximum braking torque (11) is generated, generating a control command (13) for activating the electric motor (3), so that the motor torque (12) is generated together with the maximum braking torque (11).

2. Method according to Claim 1,
wherein the motor torque (12) is determined by forming the difference between the total braking torque (7) and the maximum braking torque (11).

3. Method according to either of the preceding claims,
wherein a maximum drive torque (19) that can be generated by means of the electric motor (3) is not smaller in terms of magnitude than the maximum braking torque (11).

4. Method according to any of the preceding claims, further comprising:
receiving measurement data (8) that indicate a current speed of the electric motor (3);
wherein the total braking torque (7) is determined by evaluating the measurement data (8).

5. Controller (6) comprising a processor, which is configured to execute the method according to any of the preceding claims.

6. Brake assist system (4) for an electric motorcycle (1), wherein the brake assist system (4) comprises:
an electric motor (3) for accelerating and/or braking the electric motorcycle (1); and
a controller (6) according to Claim 5.

7. Brake assist system (4) according to Claim 6, further comprising:
a brake system (5) for braking the electric motorcycle (1);
wherein the brake system (5) is adapted such that a maximum braking torque (11) that can be generated by means of the brake system (5) is not greater in terms of magnitude than a maximum drive torque (19) that can be generated by means of the electric motor (3).

8. Brake assist system (4) according to Claim 7,
wherein the brake system (5) comprises a hydraulic brake circuit (16) and at least one brake pressure valve (18) for limiting a brake pressure in the hydraulic brake circuit (16) to a value corresponding to the maximum drive torque (19).

9. Computer program comprising instructions that, when the computer program is executed by the processor, cause a processor to execute the method according to any of Claims 1 to 4.

10. Computer-readable medium, on which the computer program according to Claim 9 is stored.

## Revendications

1. Procédé pour faire fonctionner un système (4) d'assistance au freinage pour une motocyclette électrique (1), le procédé comprenant les étapes suivantes :
déterminer un couple de freinage total (7) nécessaire pour freiner la motocyclette électrique (1) ; **caractérisé par**
le fait de déterminer le couple moteur (12) à générer au moyen du moteur électrique (3) de la motocyclette électrique (1) en fonction du couple de freinage total (7) et du couple de freinage maximal (11) pouvant être généré par le système de freinage (5) de la motocyclette électrique (1) ; et,
lorsque le couple de freinage maximal (11) est généré, le fait de générer une instruction de commande (13) pour commander le moteur électrique (3) de telle sorte que le couple moteur (12) soit généré conjointement avec le couple de freinage maximal (11).

2. Procédé selon la revendication 1,
dans lequel le couple moteur (12) est déterminé en formant une différence entre le couple de freinage total (7) et le couple de freinage maximal (11).

3. Procédé selon l'une des revendications précédentes,
dans lequel un couple d'entraînement maximal (19) apte à être généré par le moteur électrique (3) n'est pas inférieur en valeur absolue au couple de freinage maximal (11).

4. Procédé selon l'une des revendications précédentes, comprenant en outre :
le fait de recevoir des données de mesure (8) indiquant une vitesse de rotation actuelle du moteur électrique (3) ;
le couple de freinage total (7) étant déterminé par l'évaluation des données de mesure (8).

5. Appareil de commande (6) comprenant un processeur configuré pour mettre en œuvre le procédé selon l'une des revendications précédentes.

6. Système (4) d'assistance au freinage pour une motocyclette électrique (1), le système (4) d'assistance au freinage comprenant :
un moteur électrique (3) pour accélérer et/ou freiner la motocyclette électrique (1) ; et
un appareil de commande (6) selon la revendication 5.

7. Système (4) d'assistance au freinage selon la revendication 6, comprenant en outre :
un système de freinage (5) pour freiner la motocyclette électrique (1) ;
le système de freinage (5) étant conçu de telle sorte qu'un couple de freinage maximal (11) apte à être généré au moyen du système de freinage (5) ne soit pas supérieur à un couple d'entraînement maximal (19) apte à être généré par le moteur électrique (3).

8. Système (4) d'assistance au freinage selon la revendication 7,
dans lequel le système de freinage (5) comprend un circuit de freinage hydraulique (16) et au moins une soupape de pression de freinage (18) pour limiter une pression de freinage dans le circuit de freinage hydraulique (16) à une valeur correspondant au couple d'entraînement maximal (19).

9. Programme informatique comprenant des instructions qui, lors de l'exécution du programme informatique par le processeur, amènent celui-ci à mettre en œuvre le procédé selon l'une des revendications 1 à 4.

10. Support lisible par ordinateur sur lequel est enregistré le programme informatique selon la revendication 9.
